# EUROPÄISCHE PATENTSCHRIFT

(11) **EP 2 359 539 B1**
(45) Veröffentlichungstag und Bekanntmachung des Hinweises auf die Patenterteilung: **04.07.2018**
(21) Anmeldenummer: 09760144.7
(22) Anmeldetag: 23.11.2009
(51) Int. Cl.: H04L 12/40, H04L 12/403, H04L 7/00, H04J 3/06

(54) **DATENÜBERTRAGUNGSPROTOKOLL**
DATA TRANSMISSION PROTOCOL
PROTOCOLE DE TRANSMISSION DE DONNÉES

(30) Priorität: 21.11.2008 DE 102008058554
(43) Veröffentlichungstag der Anmeldung: 24.08.2011
(73) Patentinhaber: Continental Teves AG & Co. oHG, 60488 Frankfurt (DE)
(72) Erfinder: SCHRIEFER, Jörn, 64347 Griesheim (DE); PEICHL, Thomas, 61206 Wöllstadt (DE); SCHERSCHMIDT, Jürgen, 60322 Frankfurt (DE)
(86) Internationale Anmeldenummer: PCT/EP2009/065647
(87) Internationale Veröffentlichungsnummer: WO 2010/058008

(56) Entgegenhaltungen:
- WO-A1-2007/141508
- WO-A1-2007/144412
- WO-A2-2006/044140
- DE-A1- 19 702 270
- DE-A1-102005 014 783
- US-A1- 2008 075 128

## Beschreibung

Die Erfindung betrifft ein elektronisches Kommunikationssystem gemäß Oberbegriff von Anspruch 1, ein Verfahren zur Datenübertragung zwischen zumindest einer ersten Kommunikationseinheit und wenigstens einer zweiten Kommunikationseinheit sowie die Verwendung des Kommunikationssystems in Kraftfahrzeugen.

Aus der WO 2007/144412 ist ein Verfahrung zur Übertragung von Messdaten von einer Sensoreinrichtung an eine Steuerungseinrichtung bekannt, bei der die Latenzzeit für die Übertragung reduziert wird.

Aus der WO 2007/141508 geht ein Kommunikationsverfahren hervor, bei welchem Signale gemeinsam einer Multiplex-Operation unterliegen. Innerhalb des Multiplex-Signals kann dabei ein Synchronisationssignal vorgesehen sein.

Der Stand der Technik schlägt beispielsweise im Bereich der seriellen Bussysteme Datenübertragungsprotokolle vor, die bezüglich ihrer Flexibilität bei der Optimierung für ihre Anwendung starken Einschränkungen unterliegen.

Die Erfindung hat sich die Ausgabe gestellt, ein Kommunikationssystem und ein Verfahren zur Datenübertragung vorzuschlagen, welches eine relativ flexible Kommunikation zwischen zumindest einer ersten Kommunikationseinheit und wenigstens einer zweiten Kommunikationseinheit erlaubt.

Diese Aufgabe wird erfindungsgemäß gelöst durch das elektronische Kommunikationssystem gemäß Anspruch 1 und das Verfahren gemäß Anspruch 5.

Es ist bevorzugt, dass das Datenübertragungsprotokoll so ausgebildet ist, dass die erste Kommunikationseinheit in einem ersten Datenübertragungsmodus ein Datensignal und ein Datenanforderungssignal oder Taktsignal im Wesentlichen gleichzeitig und/oder das Taktsignal eingebettet in das Datensignal und/oder ein gemeinsames Daten-Taktsignal über die erste Datenleitung zumindest an die zweite Kommunikationseinheit überträgt.

Zumindest die zweite Kommunikationseinheit ist vorzugsweise so ausgebildet, dass sie ein Identifikationspaket und/oder ein Kommandopaket und/oder ein Adresspaket und/oder ein Endungspaket der ersten Kommunikationseinheit empfangen und selbstständig interpretieren kann.

Es ist zweckmäßig, dass zumindest die zweite Kommunikationseinheit so ausgebildet ist, dass sie das Identifikationspaket als Teilnehmeridentifikation oder Anweisungsidentifikation interpretiert und sich nach dieser Interpretation selbstständig in einen definierten Betriebsmodus versetzt und/oder auf weitere Pakete wartet und/oder eine definierte Antwort an die erste Kommunikationseinheit überträgt und/oder eine interne Aktivität selbsttätig veranlasst und ausführt, wobei diese interne Aktivität insbesondere das Speichern eines definierten Datums oder mehrerer definierter Daten an einer oder mehreren definierten Speicheradressen umfasst.

Unter einer Teilnehmeridentifikation wird bevorzugt eine Identifikation verstanden, mit welcher der eine oder die mehreren Empfänger bzw. Teilnehmer bzw. Kommunikationspartner eines definierten Kommunikationsvorgangs benannt bzw. definiert wird/werden.

Zumindest die zweite Kommunikationseinheit ist vorzugsweise so ausgebildet, dass sie das Identifikationspaket bezüglich einer Auswahl aus mindestens zwei definierten Identifikationsmodi interpretieren kann.

Es ist bevorzugt, dass zumindest die zweite Kommunikationseinheit so ausgebildet ist, dass sie wenigstens eine Anweisungsidentifikations-Zuordnungseinheit aufweist, insbesondere als Tabelleneinheit ausgebildet, welche mindestens einer definierten Anweisungsidentifikation eines Identifikationspakets den Inhalt einer oder mehrerer Speicherzellen der zweiten Kommunikationseinheit zur Ausführung einer definierten, zumindest teilweise in dieser wenigstens einen Speicherzelle hinterlegten, Anweisung zuordnet. Diese Anweisung umfasst dabei besonders bevorzugt zumindest ein Kommandopaket, wenigstens ein Adresspaket und ein oder mehrere Datenpakete.

Es ist zweckmäßig, dass das Datenübertragungsprotokoll so ausgebildet ist, dass das Kommandopaket zumindest eine Information darüber enthält, ob ein Lese- oder Schreibezugriff durchgeführt werden soll und/oder ob ein Einzel- oder Mehrfachzugriff durchgeführt werden soll und/oder ob ein direkter oder indirekter Speicherzugriff durchgeführt werden soll.

Es ist bevorzugt, dass das Datenübertragungsprotokoll und zumindest die zweite Kommunikationseinheit so ausgelegt sind, dass der Inhalt der einen oder mehreren Speicherzellen der zweiten Kommunikationseinheit, die mittels der Anweisungsidentifikations-Zuordnungseinheit einer definierten Anweisungsidentifikation zugeordnet sind, durch Empfang und Interpretation definierter Pakete bzw. zumindest einer definierten Botschaft, insbesondere zumindest eines definierten Kommandopakets, eines oder mehrerer definierter Adresspakete und eines oder mehrerer definierter Datenpakete, seitens der zweiten Kommunikationseinheit zumindest teilweise überschrieben wird. Hierdurch kann die Anweisung, welche einer definierten Anweisungsidentifikation zugeordnet ist, geändert bzw. überschrieben werden.

Das Verfahren ist vorzugsweise weiterentwickelt, indem die erste Kommunikationseinheit zu Beginn eines definierten, insbesondere in sich abgeschlossenen, Kommunikationsvorgangs mit zumindest der zweiten Kommunikationseinheit, ein Synchronisationspaket über wenigstens die erste Datenleitung wenigstens an die zweite Kommunikationseinheit überträgt. Alternativ vorzugsweise oder insbesondere zusätzlich überträgt die zweite Kommunikationseinheit zu Beginn eines eigenen Sendevorgangs ein Synchronisationspaket zumindest an die erste Kommunikationseinheit.

Es ist bevorzugt, dass in einem definierten Kommunikationsvorgang zusätzlich, insbesondere anschließend, eine Botschaft von der ersten Kommunikationseinheit an die zweite Kommunikationseinheit und/oder eine Botschaft von der zweiten Kommunikationseinheit an die erste Kommunikationseinheit über wenigstens die erste Datenleitung übertragen wird.

Es ist zweckmäßig, dass das Identifikationspaket zumindest von der zweiten Kommunikationseinheit als Teilnehmeridentifikation oder Anweisungsidentifikation interpretiert wird, wonach sich die zweite Kommunikationseinheit selbst in einen definierten Betriebsmodus versetzt und/oder auf weitere Pakete wartet und/oder wonach die zweite Kommunikationseinheit eine definierte Antwort an die erste Kommunikationseinheit überträgt und/oder eine interne Aktivität selbsttätig veranlasst und ausführt, wobei diese interne Aktivität insbesondere das Speichern eines definierten Datums oder mehrerer definierter Daten an einer oder mehreren definierten Speicheradressen umfasst.

Es ist bevorzugt, dass wenigstens die zweite Kommunikationseinheit zumindest eine definierte Anweisungsidentifikation eines Identifikationspakets mittels einer Anweisungsidentifikations-Zuordnungseinheit einer Anweisung zuordnet und diese ausführt, welche als Inhalt einer oder mehrerer Speicherzellen in der zweiten Kommunikationseinheit hinterlegt ist, wobei diese Anweisung insbesondere zumindest aus einem Datum entsprechend einem Kommandopaket, aus zumindest einem Datum entsprechend wenigstens einem Adresspaket und aus einem oder mehreren Daten entsprechend mindestens einem Datenpaket besteht.

Es ist bevorzugt, dass die erste Kommunikationseinheit in einem ersten Datenübertragungsmodus ein Datensignal und ein Datenanforderungssignal/Taktsignal im Wesentlichen gleichzeitig und/oder das Taktsignal eingebettet in das Datensignal und/oder ein gemeinsames Daten-Taktsignal über die erste Datenleitung zumindest an die zweite Kommunikationseinheit überträgt.

Zumindest die zweite Kommunikationseinheit weist vorzugsweise eine Speicherverwaltung auf, welche Adressdaten umfasst, die jeweils definierte Speicherzellen der zweiten Kommunikationseinheit referenzieren.

Es ist bevorzugt, dass nach Empfang eines Kommandopakets, welches einen indirekten Speicherzugriff anzeigt, die Adressinformation des nachfolgenden Adresspakets auf eine Speicherzelle verweist, in welcher die Adressinformation einer anderen Speicherzelle hinterlegt ist, auf welche der Speicherzugriff erfolgt bzw. auf welche der Speicherzugriff durchgeführt wird.

Es ist zweckmäßig, dass zur Referenzänderung für einen indirekten Speicherzugriff, die Adressinformation, welche in einer bestimmten Speicherzelle hinterlegt ist, überschrieben wird. Dabei referenziert diese Adressinformation insbesondere auf eine andere Speicherzelle. Solch eine Referenzänderung wird besonders bevorzugt im Rahmen eines definierten Kommunikationsvorgangs durchgeführt.

Eine Änderung einer definierten Anweisung, die einer Anweisungsidentifikation zugeordnet ist und/oder eine Referenzänderung wird/werden bevorzugt zur Laufzeit im Rahmen eines oder mehrerer definierter Kommunikationsvorgänge durchgeführt.

Das Kommunikationssystem weist vorzugsweise ein Datenübertragungsprotokoll auf, gemäß welchem zumindest in einem zweiten Datenübertragungsmodus zur synchronen Datenübertragung die erste Kommunikationseinheit mindestens einmal ein Datenanforderungssignal oder ein Taktsignal über die erste Datenleitung an die zweite Kommunikationseinheit überträgt und die zweite Kommunikationseinheit ein Datensignal als Antwort auf das Datenanforderungssignal oder das Taktsignal über die erste Datenleitung an die erste Kommunikationseinheit überträgt.

Die erste Kommunikationseinheit und zumindest die zweite Kommunikationseinheit sind bevorzugt über die erste Datenleitung als einzige Datenleitung miteinander verbunden.

Die relativ geringe Anzahl an Leitungen, insbesondere Datenleitungen, besonders bevorzugt einer einzigen Datenleitung, aufgrund des zweiten und/oder ersten Datenübertragungsmodus ermöglicht signifikante Kosteneinsparungen gegenüber Kommunikationssystemen mit mehreren Datenleitungen.

Unter einer Übertragung eines Datensignals und/oder eines anderen Signals über eine Leitung, insbesondere über die erste Datenleitung, wird vorzugsweise ein Senden des Signals über die Leitung und/oder ein Anlegen des Signals an die Leitung verstanden.

Unter einem Taktsignal wird bevorzugt ein Clocksignal verstanden und unter einer Taktgebereinheit eine Clock bzw. Clockeinheit.

Das Datenübertragungsprotokoll ist vorzugsweise so ausgebildet, dass das Datensignal der zweiten Kommunikationseinheit bezüglich des zweiten Datenübertragungsmodus eine definierte Anzahl an Bits umfasst, insbesondere genau ein Bit.

Es ist bevorzugt, dass das Datenübertragungsprotokoll bezüglich des zweiten Datenübertragungsmodus so ausgebildet ist, dass eine Botschaft, welche insbesondere wenigstens eine definierte, separat interpretierbare Information umfasst, der zweiten Kommunikationseinheit an die erste Kommunikationseinheit mehrere Datensignale umfasst. Besonders bevorzugt umfasst diese Botschaft genau eine Information.

Unter einer Botschaft wird beispielsweise ein codierter Wert einer durch ein Sensorelement erfassten physikalischen Größe oder ein Betriebsparameter eines Sensors oder Aktors verstanden.

Das Datenübertragungsprotokoll ist zumindest bezüglich des zweiten Datenübertragungsmodus bevorzugt so ausgebildet, dass das Taktsignal der ersten Kommunikationseinheit und das Datensignal der zweiten Kommunikationseinheit im Wesentlichen gleichzeitig über die erste Datenleitung übertragen werden.

Es ist zweckmäßig, dass die erste Kommunikationseinheit und zumindest die zweite Kommunikationseinheit über eine zusätzliche Masseleitung bzw. eine Bezugspotentialleitung und/oder über eine zusätzliche Energieversorgungsleitung miteinander verbunden sind. Besonders bevorzugt wird außerdem die erste Datenleitung zusätzlich auch als Energieversorgungsleitung genutzt, was im Folgenden als Zwei-Draht-Schnittstelle bezeichnet wird.

Es ist bevorzugt, dass das Datenübertragungsprotokoll zumindest bezüglich des zweiten Datenübertragungsmodus so ausgebildet ist, dass das Datensignal als Ausgangssignal der zweiten Kommunikationseinheit und das Taktsignal oder das Datenanforderungssignal der ersten Kommunikationseinheit auf der ersten Datenleitung überlagert werden oder dass das Datensignal der zweiten Kommunikationseinheit das Taktsignal oder das Datenanforderungssignal der ersten Kommunikationseinheit auf der ersten Datenleitung übersteuert, wobei das Datensignal insbesondere den Signalwert auf der ersten Datenleitung bestimmt.

Vorzugsweise weist wenigstens die zweite Kommunikationseinheit keine eigene Taktgebereinheit auf oder sie weist eine Taktgebereinheit auf, welche nicht synchron zu einer Taktgebereinheit der ersten Kommunikationseinheit arbeitet und/oder welche im Vergleich zur Taktgebereinheit der ersten Kommunikationseinheit eine geringere Taktpräzision bzw. größere Taktschwankungen aufweist.

Die zweite Kommunikationseinheit ist bevorzugt so ausgebildet, dass ihre Antwortzeit auf das Datenanforderungssignal oder das Taktsignal der ersten Kommunikationseinheit innerhalb eines definierten Zeitintervalls liegt, welches insbesondere kleiner bzw. kürzer ist als die Periodendauer oder ein Vielfaches der Periodendauer des Taktsignals der ersten Kommunikationseinheit und/oder des Takts der Taktgebereinheit der ersten Kommunikationseinheit. Besonders bevorzugt ist wenigstens die zweite Kommunikationseinheit bzw. eine erste Slaveeinheit so ausgebildet, dass diese eine garantierte Antwortzeit auf wenigstens ein definiertes Signal der ersten Kommunikationseinheit aufweist und dadurch echtzeitfähig ist.

Die erste Kommunikationseinheit weist vorzugsweise einen Datenausgang bzw. Datenausgangsanschluss auf, welcher mit der ersten Datenleitung direkt oder indirekt verbunden ist, wobei an diesem Datenausgang bzw. Datenausgangsanschluss das Taktsignal oder Datenanforderungssignal der ersten Kommunikationseinheit bereitgestellt bzw. angelegt wird.

Unter dem Namen "Serial Peripheral Interface" ist ein Serieller-Datenbus-Standard bekannt, welcher eine bidirektionale, synchrone und serielle Datenübertragung zwischen einer Mastereinheit und verschiedenen Slaveeinheiten zulässt. Dabei umfasst ein entsprechendes Kommunikationssystem allerdings wenigstens drei Leitungen zwischen der Mastereinheit und einer ersten Slaveeinheit für eine bidirektionale Datenübertragung, nämlich zwei Datenleitungen und eine Taktleitung. Bei mehreren Slaveeinheiten benötigt jede dieser Einheiten eine zusätzliche Selektleitung zur Mastereinheit.

Das Kommunikationssystem ist bevorzugt als modifiziertes Serial-Peripheral-Interface-Kommunikationssystem mit verminderter Leitungszahl ausgebildet, insbesondere mit genau einer Informationsübertragungsleitung - der ersten Datenleitung, wobei wenigstens die erste Kommunikationseinheit und/oder zumindest die zweite Kommunikationseinheit im Wesentlichen einem Serial-Peripheral-Interface-Standard genügend ausgebildet sind. Die erste Kommunikationseinheit weist diesbezüglich insbesondere wenigstens einen Datenanschluss und einen Taktanschluss auf, welche taktsynchron betrieben werden bzw. welche einer gemeinsamen Taktgebereinheit zugeordnet sind. Alternativ weist die erste Kommunikationseinheit zwei Datenanschlüsse auf, von denen ein Datenanschluss als Dateneingang und ein Datenanschluss als Datenausgang betrieben wird, wobei die Datenanschlüsse synchron zueinander betrieben werden. Die erste Kommunikationseinheit weist besonders bevorzugt einen Datenausgang und einen Dateneingang auf, wobei diese gemeinsam direkt oder indirekt mit der ersten Datenleitung verbunden sind.

Das Kommunikationssystem weist vorzugsweise zumindest eine Umschalteinheit auf, die so ausgebildet und angeschlossen ist, dass mit ihr zwischen einem Betrieb ohne separate Taktleitung zumindest zwischen erster und zweiter Kommunikationseinheit und einem Betrieb gemäß dem Serial-Peripheral-Interface-Standard mit separater Taktleitung wenigstens zwischen erster und zweiter Kommunikationseinheit umgeschaltet werden kann. Die Umschalteinheit wird insbesondere durch die erste Kommunikationseinheit angesteuert, wobei diese besonders bevorzugt einen zusätzlichen Umschaltanschluss aufweist und dieser Umschaltanschluss ganz besonders bevorzugt mit der Umschaltleitung über wenigstens eine Verbindungsleitung verbunden ist.

Die erste Kommunikationseinheit und/oder die zweite Kommunikationseinheit weisen vorzugsweise eine Push-Pull-Stufe mit einem High-Side-Treiber und einem Low-Side-Treiber oder einen High-Side-Treiber mit einem optionalen Pull-Down-Widerstand oder einen Low-Side-Treiber mit einem optionalen Pull-Up-Widerstand auf. Insbesondere weisen jeweils die erste und die zweite Kommunikationseinheit eine Push-Pull-Stufe, welche bevorzugt auch als Gegentaktstufe bezeichnet wird, zum Anlegen eines jeweiligen Ausgangssignals an die erste Datenleitung auf. Unter einem High-Side-Treiber wird dabei besonders bevorzugt eine elektronische Schaltung verstanden, welche ein aktiv geschaltetes "High"-Signal an die erste Datenleitung anlegt und/oder eine elektrische Größe auf der ersten Datenleitung auf einen definierten "High"-Wert einstellt. Unter einem Low-Side-Treiber wird dabei besonders bevorzugt entsprechend eine elektronische Schaltung zur Einstellung eines aktiv geschalteten "Low"-Signals bzw. "Low"-Signalwertes bzw. ein Anlegen eines elektrischen Potentials, im Wesentlichen entsprechend eines Massepotentials, verstanden.

Es ist bevorzugt, dass die erste und wenigstens die zweite Kommunikationseinheit sowie das Datenübertragungsprotokoll so ausgebildet sind, dass das Datensignal und/oder das Datenanforderungssignal oder das Taktsignal über definierte Strom- und/oder Spannungswerte oder durch optische Datenübertragung auf der ersten Datenleitung übertragen werden. Dabei ist vorgesehen, dass das Datensignal und/oder das Datenanforderungssignal oder das Taktsignal mittels einer definierten Signalform, umfassend mindestens eine definierte Signalflanke und/oder wenigstens einen Signalimpuls und/oder zumindest eine Signalimpulspause, codiert sind.

Es ist zweckmäßig, dass die erste Kommunikationseinheit als Mastereinheit und die zweite Kommunikationseinheit als Slaveeinheit ausgebildet sind und insbesondere das Datenübertragungsprotokoll so ausgebildet ist, dass der zweite Datenübertragungsmodus als Slave-Sende-Datenübertragungsmodus ausgelegt ist und/oder der erste Datenübertragungsmodus als Master-Sende-Datenübertragungsmodus.

Die erste Kommunikationseinheit ist vorzugsweise mit wenigstens der zweiten Kommunikationseinheit über eine Zwei-Draht-Schnittstelle verbunden, über welche unidirektional oder bidirektional Informationen, insbesondere stromcodiert, übertragen werden. Insbesondere wird dabei die zweite Kommunikationseinrichtung über diese Zwei-Draht-Schnittstelle mit elektrischer Energie versorgt.

Die zweite Kommunikationseinheit ist vorzugsweise in eine Sensor- und/oder Aktoreinheit integriert.

Das Kommunikationssystem umfasst zweckmäßigerweise mehrere "Slave"-Kommunikationseinheiten, welche jeweils im Wesentlichen entsprechend der zweiten Kommunikationseinheit ausgebildet sind und insbesondere jeweils mittels einer einzigen Datenleitung mit der ersten Kommunikationseinheit verbunden sind.

Es ist bevorzugt, dass die zweite Kommunikationseinheit gemäß des zweiten Datenübertragungsmodus das Datensignal als Antwort auf das Datenanforderungssignal oder das Taktsignal der ersten Kommunikationseinheit innerhalb eines definierten Zeitintervalls sendet, welches insbesondere kleiner ist als die Periodendauer oder ein Vielfaches der Periodendauer des Taktsignals der ersten Kommunikationseinheit und/oder des Takts einer Taktgebereinheit der ersten Kommunikationseinheit.

Unter einem Synchronisationspaket wird zweckmäßigerweise ein eindeutig identifizierbar ausgebildetes Signal und/oder eine entsprechende Signal-/Datenfolge verstanden, die so ausgebildet ist, dass aus ihrem Auftreten bzw. dem jeweiligen Empfangszeit- oder Sendezeitpunkt oder ihrer Ausbildung eine Synchronisationsinformation gewonnen werden kann, mittels derer zumindest eine Kommunikationseinheit ihre eigene Kommunikation mit der anderen Kommunikationseinheit, von welcher das Synchronisationspaket stammt, synchronisieren kann.

Es ist bevorzugt, dass in einem definierten Kommunikationsvorgang, insbesondere anschließend, ein Synchronisationspaket und/oder ein Identifikationspaket und/oder ein Kommandopaket und/oder ein Adresspaket von der ersten Kommunikationseinheit an zumindest die zweite Kommunikationseinheit über die erste Datenleitung übertragen wird. Mittels des Identifikationspakets kann die erste Kommunikationseinheit insbesondere jederzeit die Kommunikationsteilnehmer auswählen. Mittels des Sendens eines Synchronisationspakets kann insbesondere jederzeit ein neuer Kommunikationsvorgang eingeleitet werden. Außerdem kann durch das Synchronisationspaket die Datenübertragungsgeschwindigkeit/-rate angepasst werden. Durch das Identifikationspaket kann beispielsweise die spezifische Auswahl von Kommunikationsteilnehmern innerhalb eines Kommunikationsvorgangs definiert werden.

Am Ende eines definierten Kommunikationsvorgang wird zweckmäßigerweise ein Endungspaket übertragen, welches insbesondere eine Prüfsumme umfasst, damit eine fehlerhaft übertragene Botschaft identifiziert werden kann.

Es ist zweckmäßig, dass in einem definierten Kommunikationsvorgang zusätzlich, insbesondere anschließend, eine Botschaft von der ersten Kommunikationseinheit an die zweite Kommunikationseinheit gemäß des ersten Datenübertragungsmodus und/oder eine Botschaft von der zweiten Kommunikationseinheit an die erste Kommunikationseinheit, gemäß des ersten Datenübertragungsmodus, über die erste Datenleitung übertragen wird.

Es ist bevorzugt, dass das Synchronisationspaket ein eindeutig identifizierbares Startblocksignal umfasst, welches insbesondere eine Start-Impulspause definierter Länge und einen Start-Impuls definierter Länge aufweist und/oder ein Start-Impuls-Start-Impulspausen-Signal aufweist, wobei das Zeitdauerverhältnis von Start-Impuls zu Start-Impulspause eine definierte, insbesondere eindeutig identifizierbare, Größe aufweist und/oder welches eine eindeutig identifizierbare Folge von Start-Impulsen und Start-Impulspausen mit jeweils definierter Dauer aufweist. Besonders bevorzugt ermittelt wenigstens die zweite Kommunikationseinheit aus dem eindeutig identifizierbaren Startblocksignal eine Taktreferenzgröße und führt ganz besonders bevorzugt anschließend mittels dieser Taktreferenzgröße eine Anpassung des eigenen definierten Datenanforderungssignal/Taktsignal-Antwortsignal-Zeitintervalls bzw. eine Anpassung der eigenen Antwortzeit durch.

Das Identifikationspaket umfasst bevorzugt eine Information, ob der aktuelle Kommunikationsvorgang sämtliche weiteren Kommunikationseinheiten ("broadcast message"), insbesondere alle mit der sendenden Kommunikationseinheit verbundenen Slave-Einheiten, eine oder mehrere einzelne Kommunikationseinheiten, beispielsweise lediglich die zweite Kommunikationseinheit betrifft und diese weitere Informationen zu erwarten haben oder ob eine oder mehrere oder sämtliche weiteren Kommunikationseinheiten eine oder mehrere definierte interne Aktivitäten bzw. Aktionen ausführen sollen ("EID" bzw. "event ID"), wodurch eine oder mehrere solcher interner Aktivitäten synchron veranlasst werden können. Mittels des Identifikationspakets kann somit zur Laufzeit bzw. flexibel innerhalb eines Kommunikationsvorgangs zwischen verschiedenen Kommunikationstypen gewählt werden. Außerdem können die Kommunikationsteilnehmer bzw. die Adressaten der Kommunikation bzw. des jeweiligen Kommunikationsvorgangs definiert werden.

Das Kommandopaket umfasst bevorzugt eine Information bezüglich der Art des Zugriff der ersten Kommunikationseinheit auf die zweite Kommunikationseinheit oder umgekehrt und dabei insbesondere ob ein Lesezugriff und/oder ein Schreibzugriff durchgeführt werden soll. Dabei definiert das Kommandopaket besonders bevorzugt, ob ein direkter oder indirekter Speicherzugriff über einen Adresszeiger erfolgt. Zusätzlich definiert das Kommandopaket ganz besonders bevorzugt ob auf eine oder mehrere Speicheradressen zugriffen werden soll und/oder ob ein wahlfreier Zugriff ("random access" bei einer Speicheradresse oder "random burst" bei mehreren Speicheradressen) oder ein linearer bzw. inkrementeller Speicherzugriff ("incremental burst" für mehrere Speicheradressen) oder ein bit-weiser Zugriff ("read-modify-write") oder ein impliziter Zugriff ("inherent"), bei welchem die eine oder die mehreren Speicheradressen Teil des Kommandos bzw. Befehls sind, durchgeführt werden soll. Durch diese Art des Kommandopakets, welches zumindest einen der obig beschriebenen Zugriffe definiert, kann ein flexibler Zugriff zur Laufzeit bzw. innerhalb eines Kommunikationsvorgangs durchgeführt werden, wobei dieser Zugriff in Form des Kommandopakets je nach Betriebszustand durch die erste Kommunikationseinheit bzw. die Mastereinheit angepasst werden kann.

Das wenigstens eine Adresspaket, welches bevorzugt nach zumindest einem Kommandopaket übertragen wird, definiert bzw. umfasst die Information der einen oder der mehreren Speicheradressen, auf welche ein Lese- und/oder Schreibzugriff erfolgen soll.

Die Botschaft ("message") umfasst bevorzugt ein Datum oder mehrere Daten bzw. Datenpakete, wobei diesem Datum/ diesen Daten bzw. Datenpakten insbesondere jeweils mehrere entsprechende Datensignale zugeordnet sind, welche über die erste Datenleitung übertragen werden.

Es ist zweckmäßig, dass das Datenübertragungsprotokoll so ausgebildet ist, dass zunächst optional ein Synchronisationspaket übertragen wird, danach ein oder mehrere Identifikationspakete, insbesondere ein einziges Identifikationspaket, anschließend ein oder mehrere Kommandopakete, insbesondere ein einziges Kommandopaket, danach ein oder mehrere Adresspakete, anschließend eine Botschaft, umfassend ein oder mehrere Datenpakete, oder mehrere Botschaften, insbesondere eine Botschaft von der ersten Kommunikationseinheit an die Zweite und/oder eine Botschaft von der zweiten Kommunikationseinheit an die Erste, und optional zum Schluss ein Endungspaket über die erste Datenleitung übertragen werden.

Innerhalb eines Kommunikationsvorgangs werden bevorzugt einzelne oder sämtliche Pakete oder Teile eines Pakets, beispielsweise das Identifikationspaket und/oder ein oder mehrere Datenpakete, redundant übertragen bzw. gesendet, wodurch die Zuverlässigkeit des Kommunikationsvorgangs gesteigert werden kann. Die Kommunikationseinheiten und/oder das Datenübertragungsprotokoll sind insbesondere für solche redundanten Daten- bzw. Paketübertragungen ausgelegt.

Zweckmäßigerweise erfolgt innerhalb eines Kommunikationsvorgangs eine redundante invertierte Daten-Übertragung, beispielsweise einer Botschaft, indem durch Zugriff, insbesondere mittels des Kommandopakets, auf redundante DatenQuellen (gleicher Inhalt von mindestens zwei unterschiedlichen Datenquellen), bei welchen mindestens eine den redundanten Inhalt in einer abweichenden Form bzw. Codierung (z.B. invertiert) vorhält, eine mehrfache Übertragung eines Dateninhalts in unterschiedlicher Form stattfindet. Bevorzugt erfolgt innerhalb eines Kommunikationsvorgangs eine redundante Übertragung des Identifikationspakets, indem eine Absicherung der Aktivitäten der zu synchronisierenden Kommunikationseinheiten durch redundantes Übertragen der "Event ID" durch die erste Kommunikationseinheit stattfindet.

Alternativ vorzugsweise erfolgt innerhalb eines Kommunikationsvorgangs eine redundante invertierte Übertragung des Identifikationspakets, indem eine Absicherung der Aktivitäten der zu synchronisierenden Kommunikationseinheiten durch redundantes Übertragen der "Event ID" durch die erste Kommunikationseinheit derart stattfindet, dass die redundant zu übertragenden "Event ID's" in unterschiedlicher Form (z.B. invertiert) übertragen werden.

Vorzugsweise werden zwei redundant übertragene Pakete bzw. ein redundantes Paket-Paar zu einem gemeinsamen Paket zusammengefasst und insbesondere gemeinsam übertragen, besonders bevorzugt zumindest über die erste Datenleitung.

Bevorzugt erfolgt innerhalb eines Kommunikationsvorgangs die Übertragung einer Statusinformation, indem die Kommunikationseinheit, auf welche ein Zugriff erfolgt, beispielsweise die zweite Kommunikationseinheit, durch Übertragung von Status Informationen, der Einheit von der der Zugriff erfolgt, beispielsweise die erste Kommunikationseinheit, Informationen über den Zustand der die Daten übertragenden Einheit und/oder die Gültigkeit der Daten selbst mitteilt. Insbesondere erfolgt die Übertragung einer konfigurierbaren Status-Information, indem die Kommunikationseinheit, auf die ein Zugriff erfolgt, durch Übertragung von Status-Informationen innerhalb des Kommunikationsvorgangs, der Kommunikationseinheit von der der Zugriff erfolgt, Informationen über den Zustand der die Daten übertragenden Einheit oder die Gültigkeit der Daten selbst mitteilt und die Art und/oder Anzahl der zu übertragenden Status Informationen konfigurierbar sind. Besonders bevorzugt erfolgt die Übertragung von zur Laufzeit konfigurierbare Status-Information, indem die Kommunikationseinheit, auf die ein Zugriff erfolgt, durch Übertragung von Status-Informationen innerhalb des Kommunikationszyklus, der Kommunikationseinheit von der der Zugriff erfolgt, Informationen über den Zustand der die Daten übertragenden Einheit oder die Gültigkeit der Daten selbst mitteilt und die Art und/oder Anzahl der zu übertragenden Status Informationen von dem Inhalt einer Speicherzelle der Kommunikationseinheiten auf die der Zugriff erfolgt abhängt, welche durch mindestens eine andere Kommunikationseinheit zur Laufzeit änderbar ist.

Zweckmäßigerweise erfolgt innerhalb eines Kommunikationsvorgangs die Übertragung eines Echos indem die Einheit auf die der Zugriff erfolgt durch zumindest teilweise Wiederholung der durch die zugreifende Einheit übertragenen Informationen den korrekten Empfang quittiert insbesondere erfolgt eine Übertragung eines Echos des Identifikationspakets und/oder des Kommandopakets und/oder des Adresspakets und/oder des Endungspakets, indem die Kommunikationseinheit, auf welche der Zugriff erfolgt, beispielsweise die zweite Kommunikationseinheit durch das Übertragen einer zumindest teilweisen Wiederholung des entsprechenden Pakets an die erste Kommunikationseinheit den Empfang des entsprechenden Pakets quittiert bzw. bestätigt.

Das Endungspaket wird bevorzugt als Echo der einen Kommunikationseinheit, auf welche zugegriffen wurde, beispielsweise die zweite Kommunikationseinheit, wieder an die erste Kommunikationseinheit übertragen, wobei dieses Echo eine zumindest teilweise Wiederholung umfasst und/oder auf Basis der ursprünglich übertragenen Daten/Pakete gebildeten bzw. berechneten Prüfdaten. Alternativ vorzugsweise wird das Endungspaket von der zugreifenden Einheit, beispielsweise der ersten Kommunikationseinheit, an die andere/n Kommunikationseinheit/en als zumindest teilweise Wiederholung und/oder Prüfdatenpaket am Ende eines Kommunikationsvorgangs übertragen.

Es ist bevorzugt, dass innerhalb eines Kommunikationsvorgangs eine Zeitreferenz zur Bestimmung des Alters eines Datums übertragen wird, indem die Einheit auf die der Zugriff erfolgt, beispielsweise die zweite Kommunikationseinheit, eine Zeitinformation bzgl. des Alters von Daten bildet und diese mit den Daten an die zugreifende Einheit überträgt.

Bevorzugt wird innerhalb eines Kommunikationsvorgangs ein Zähler einer internen Zeitreferenz übertragen, indem die Einheit auf die der Zugriff erfolgt eine Zeitinformation bzgl. des Alters von Daten bildet und diese mit den Daten an die zugreifende Einheit überträgt, wobei die Zeitinformation durch Zählen von K2-internen Ereignissen (z.B. interner Timer) gebildet wird. Alternativ vorzugsweise wird ein Zähler einer externen Zeitreferenz (MSG-CNT) übertragen, indem die Einheit auf die der Zugriff erfolgt eine Zeitinformation des Alters von Daten bildet und diese mit den Daten an die zugreifende Einheit überträgt, wobei die Zeitinformation durch Zählen von bezüglich der Einheit, auf welche der Zugriff erfolgt, beispielsweise die zweite Kommunikationseinheit, externen Ereignissen (z.B. Anzahl der erkannten Kommunikationszyklen) gebildet wird.

Die erste Kommunikationseinheit bzw. Mastereinheit wird vorzugsweise von einem Steuergerät und/oder einer elektronischen Kontrolleinheit umfasst und wenigstens die zweite Kommunikationseinheit bzw. erste Slaveeinheit insbesondere von einem Sensor und/oder Aktuator und/oder einer anderen elektronischen Kontrolleinheit.

Das Datenübertragungsprotokoll definiert zweckmäßigerweise eine digitale Schnittstelle, welche Möglichkeiten zur Steigerung der Datenübertragungsrate zwischen Komponenten bzw. erster und zweite Kommunikationseinheit bzw. Master- und Slaveeinheit/en bietet, bei denen neben Nutzdaten auch Zusatzdaten zur Absicherung der Signalaufbereitung und des Datentransfers übermittelt werden können. Neben den Möglichkeiten die Sicherheit, Störfestigkeit und Robustheit der Datenübertragung zu steigern, bieten digitale Schnittstellen größere Flexibilität und Skalierbarkeit als zum Beispiel analoge Schnittstellen. Durch die sequenzielle Datenübertragung und die entsprechend geringe Anzahl der Verbindungsleiter bzw. Datenleitungen, insbesondere der einzigen Datenleitung, können Kosten für die Schnittstellenanbindung reduziert und potentielle Fehlerquellen durch Kontaktprobleme minimiert werden.

Die hier beschriebene Erfindung ermöglicht insbesondere die Anbindung von Sensoren, Aktuatoren und Steuergeräten bei minimaler Anzahl an Verbindungs- und Kommunikationsleitungen. Hierbei bestehen alle Vorzüge einer bidirektionalen digitalen Datenübertragung in Richtung Übertragungssicherheit, Störfestigkeit, Robustheit und Flexibilität bei reduzierten Kosten durch die geringe Hardwarekomponentenanzahl und Standard-Hardwarekomponenten (Standard-Serial-Peripheral-Interface-Modul), was außerdem den Softwareaufwand/ Codeoverhead und die Rechenlaufzeit reduziert.

Die Erfindung betrifft entsprechend außerdem bevorzugt eine Kommunikationseinheit und/oder ein Datenübertragungsverfahren für eine bidirektionale, serielle Datenkommunikation zwischen der ersten Kommunikationseinheit/ Mastereinheit, insbesondere als Mikrocontroller ausgebildet, und der zweiten Kommunikationseinheit/ ersten Slaveeinheit, insbesondere als Sensor oder Aktuator ausgebildet, mit einer Standard-Serial-Peripheral-Interface-Schnittstelle. Durch Reduzierung auf nur eine Signalleitung bei Beibehaltung der kompletten Funktionalität erhält man eine kosten- und entwicklungseffiziente Schnittstellenimplementierung. Die Kompatibilität zum standardisierten synchronen Serial-Peripheral-Interface, die auf den meisten konventionellen Mikrocontrollern mit 3 Signalleitungen + Slave-Select-Leitung verfügbar ist, ist auch mit dieser einen Signalleitung bzw. der ersten/einzigen Datenleitung möglich und kann vorzugsweise ohne zusätzliche logische/elektronische Komponenten oder Bustreiber realisiert werden. Bei der digitalen Datenübertragung wird gegenüber der analogen oder quasidigitalen Übertragung das Signal nicht verfälscht, weshalb auch andere Nutzdaten verlustfrei übertragen werden können. Die durch die digitale bzw. verlustfreie Datenübertragung weggefallenen Toleranzen können beim Design und bei der Serienproduktion von Sensoren und Aktuatoren anderweitig verteilt werden, was sich kostenreduzierend auswirkt.

Das Kommunikationssystem weist bevorzugt an mindestens einem Aus-/Eingang wenigstens der zweiten Kommunikationseinheit und/oder an wenigstens einem Aus-/Eingang aller Slaveeinheiten und/oder der der ersten Kommunikationseinheit eine Überspannungs-Schutzdiode bzw. "Transient Voltage Suppressor Diodes (TVS)" auf, welche die ESD-Robustheit des Systems steigern.

Zweckmäßigerweise weist das Kommunikationssystem Kondensatoren an Signalleitungen bzw. zumindest an der ersten Datenleitung auf, welche die Anstiegs- und Fallzeiten der Signalflanken und somit die ausgesendete Störabstrahlung in wünschenswerter bzw. definierter Weise beeinflussen.

Um einen "idle high voltage level" der ersten Kommunikationseinheit zu gewährleisten, beispielsweise bei einer Initialisierung, weist diese bevorzugt einen "pull up"-Widerstand auf, welcher den Signalwert auf der ersten Datenleitung auf einen definierten "High"-Pegel einstellt, im Fall dass kein Kommunikationsteilnehmer Daten über die erste Datenleitung überträgt.

Das Kommunikationssystem weist zweckmäßigerweise lediglich eine einzelne Mastereinheit als erste Kommunikationseinheit und keine separate Taktübertragungsleitung auf.

Die erste Kommunikationseinheit/ Mastereinheit ist bevorzugt mit einer elektronischen Kontrolleinheit ECU verbunden, insbesondere in diese integriert. Die ECU empfängt besonders bevorzugt die von der Mastereinheit empfangenen Daten und wertet diese aus.

Es ist zweckmäßig, dass gemäß Datenübertragungsprotokoll das Datenanforderungssignal der ersten Kommunikationseinheit periodisch mit undefinierter Taktzeit oder sporadisch an zumindest die zweite Kommunikationseinheit über die erste Datenleitung übertragen wird.

Es ist bevorzugt, dass gemäß Datenübertragungsprotokoll das Datenanforderungssignal der ersten Kommunikationseinheit als Taktquelle für den Datentransfertakt und insbesondere als Taktquelle für zumindest eine taktungenaue weitere Kommunikationseinheit verwendet wird.

Das Datenanforderungssignal wird bevorzugt von der ersten Kommunikationseinheit auf der ersten Datenleitung/ gemeinsamen Verbindungsleitung ausgegeben bzw. an diese angelegt. Die zweite Kommunikationseinheit erkennt das Datenanforderungssignal und steuert ihrerseits ein entsprechendes Bit des Datensignals auf der gemeinsamen ersten Datenleitung an. Sobald die zweite Kommunikationseinheit das Anforderungssignal der ersten Kommunikationseinheit erkannt hat, darf das Senden des Datensignals der zweiten Kommunikationseinheit, insbesondere unabhängig vom aktuellen Datenanforderungssignal beginnen. Bei einer "dominanten" Auslegung der zweiten Kommunikationseinheit entspricht das Summensignal auf der ersten Datenleitung zum Zeitpunkt der Datenübernahme durch die erste Kommunikationseinheit dem Datensignal der ersten Kommunikationseinheit, ohne dass das Datenanforderungssignal zwingend abgeschaltet werden muss. Hierbei können sowohl das Datenanforderungssignal als auch das Datensignal gleichzeitig aktiv sein.

Für die Übertragung ihrer Daten und Synchronisationssignale nutzen sowohl die erste Kommunikationseinheit als auch die zweite Kommunikationseinheit bevorzugt die gleiche physikalische Größe, beispielsweise Spannung oder Strom. Alternativ vorzugsweise werden unterschiedliche physikalische Größen verwendet.

Bevorzugt nutzen die erste und zweite Kommunikationseinheit die gleichen Werte bzw. Wertebereiche bzw. Pegel zur Signalübertragung. Alternativ vorzugsweise nutzen sie unterschiedliche Werte/ Wertebereiche/ Pegel.

Soll ein Slave zum Master und umgekehrt umkonfiguriert werden, so muss zweckmäßigerweise durch Umkonfigurierung der Ausgangsbeschaltung sichergestellt werden, dass ein Slave die Signale des Masters auf der Eindraht-Verbindungsleitung überschreiben kann. Danach kann der neue Master z.B. mit einem Standard-"serial-peripheral-interface"-Modul und der neue Slave mit einer OSPI-Konfiguration betrieben werden.

Unter dem Begriff OSPI versteht man vorzugsweise ein Eindraht serielles Peripher-Interface (one wire serial peripheral interface).

Weiterhin kann ein Slave bevorzugt auch über einen OSPI-Konverter betrieben werden, der den Takt aus dem Datensignal extrahiert und auf getrennten Leitungen zur Verfügung stellt. Somit können Slave-Kommunikationseinheiten mit Standard-"serial-peripheral-interface"-Modulen eingesetzt werden. Der Vorteil liegt darin, dass die Übertragung streckenweise auf zumindest eine Verbindungsleitung reduziert werden kann, die sowohl Daten als auch das Taktsignal enthält.

An einer Mastereinheit (Master) können bevorzugt ein oder mehrere Slaveeinheiten bzw. Slave-Kommunikationseinheiten bzw. Slaves angeschlossen werden, wobei einzelne Slave-Kommunikationseinheiten wiederum selbst Mastereinheiten für weitere untergeordnete Slave-Kommunikationseinheiten sein können. Hierzu sollten die ersten Slave-Kommunikationseinheiten, die als Master für untergeordnete Slaves verwendet werden, zweckmäßiger Weise über separate "serial-peripheral-interface"-/OSPI-Module oder über die Möglichkeit zur Abkopplung vom Primärbus und/oder zur Umkonfigurierung auf eine Master- bzw. Slave-Konfiguration verfügen.

Das elektronische Kommunikationssystem basiert bevorzugt auf einer seriellen, synchronen Datenübertragung und umfasst mindestens eine, die Kommunikation initiierenden erste Kommunikationseinheit bzw. Mastereinheit und mindestens eine darauf reagierenden zweite Kommunikationseinheit bzw. Slaveeinheit, wobei während der Kommunikation die Zeitbasis für die Übertragung der Datenelemente in beide Richtungen durch die, die Kommunikation initiierende Einheit, vorgegeben wird.

Das elektronische Kommunikationssystem ist vorzugsweise für den Einsatz im Automobil-Bereich ausgebildet.

Das elektronische Kommunikationssystem ist zweckmäßigerweise für sicherheitsrelevante Applikationen ausgebildet bzw. ausgelegt.

Das elektronische Kommunikationssystem umfasst bevorzugt einen synchronen oder alternativ vorzugsweise einen asynchronen Bus.

Die Erfindung bezieht sich außerdem auf die Verwendung des elektronischen Kommunikationssystems in Kraftfahrzeugen. Insbesondere ist das Kommunikationssystem zur Anbindung von Sensoren, besonders bevorzugt Drucksensoren, und/oder Aktoren in einem Kraftfahrzeug vorgesehen. Alternativ vorzugsweise betrifft die Erfindung die Verwendung des elektronischen Kommunikationssystem und des Verfahrens in der Automatisierungstechnik.

Die stetig wachsende Anzahl von Sensoren, Aktuatoren, elektrischen Steuer- und Regelkomponenten innerhalb konventioneller Kraftfahrzeuge und die gleichzeitige Forderung nach erweiterten Funktionalitäten bei gleichen oder niedrigeren Kosten, erfordern flexible und anspruchsvolle Möglichkeiten zur Kommunikation von Steuergeräten und Sensoren/Aktuatoren.

Da viele dieser Komponenten im Automotive-Bereich auch maßgeblichen Einfluss auf die Fahrdynamik besitzen, müssen entsprechende Anforderungen an die Sicherheit und die Robustheit der Signale, Daten und Systeme eingehalten werden, welche das erfindungsgemäße Kommunikationssystem und Datenübertragungsverfahren insbesondere erfüllen.

Weitere bevorzugte Ausführungsformen ergeben sich aus den Unteransprüchen und den nachfolgenden Beschreibungen von Ausführungsbeispielen an Hand von Figuren.

Es zeigen in schematischer Darstellung
- Fig. 1: ein beispielhaftes Datenübertragungsprotokoll mit einem bestimmten Datenformat bzw. Codeformat,
- Fig. 2: ein Ausführungsbeispiel des Datenübertragungsprotokolls hinsichtlich eines Datenzugriffs durch die initiierende Einheit bzw. erste Kommunikationseinheit (Master), und
- Fig. 3: die beispielhaften Grundlagen des Datenübertragungsprotokolls.

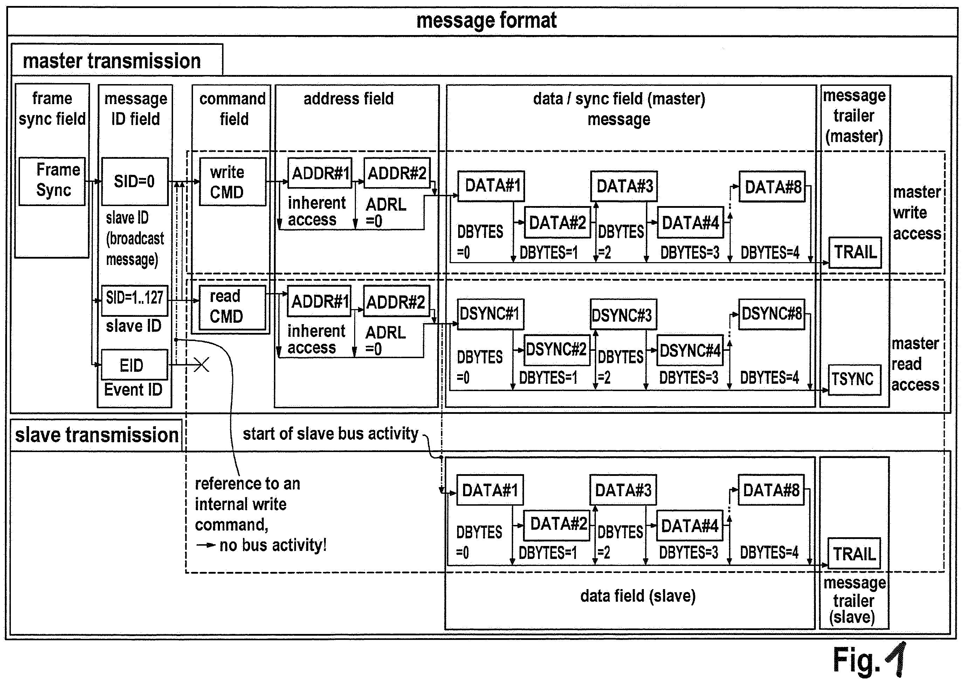

Fig. 1 zeigt die beispielhafte Ausbildung von Datenübertragungsvorgängen entsprechend des Datenübertragungsprotokolls, wobei eine Botschaft "message" von der ersten Kommunikationseinheit zur zweiten Kommunikationseinheit mittels des ersten Datenübertragungsmodus "master transmission" und von der zweiten Kommunikationseinheit zur ersten Kommunikationseinheit mittels des zweiten Datenübertragungsmodus "slave transmission" übertragen wird. Dabei umfasst die Botschaft jeweils mehrere Datenpakete DATA#n, welche hinsichtlich ihres Absenders, also Master oder Slave, unterscheidbar sind.

Zunächst sendet die erste Kommunikationseinheit bzw. die Mastereinheit ein Synchronisationspaket Frame Sync, welches zur Synchronisation der Kommunikation mit der zweiten Kommunikationseinheit bzw. der wenigstens ersten Slaveeinheit bzw. den weiteren Busteilnehmern dient und einen Kommunikationsvorgang einleitet. Danach folgt ein Identifikationspaket ID, welches entweder zur Identifizierung des Ziels mittels einer Teilnehmeridentifikation SID (slave ID) oder zur Identifikation einer auszuführenden Routine bzw. Anweisung mittels einer Anweisungsidentifikation dient EID (event ID). Ein EID-Identifikationspaket erzeugt beispielsweise keine weitere Kommunikation in direkter Weise, weil diesem Event zugeordnete Kommandos und Adressen in jedem Slave bereits hinterlegt sind. Für den Fall SID=0 weitere Informations bzw. Anweisungspakete an alle weiteren Busteilnehmer (broadcast message). Diese sind beispielsweise ein Kommandopaket, umfassend einen Schreibbefehl write CMD bei einem reinen Sendevorgang der Mastereinheit, Adresspakete ADDR#1, ADDR#2 sowie eine Botschaft in Form von Datenpaketen DATA#1 bis DATA#8. Abschließend umfasst die der Kommunikationsvorgang das Übertragen eines Endungspakets TRAIL, welches Prüfdaten aufweist.

Zusätzlich ist ein Kommunikationsvorgang veranschaulicht, bei dem eine Slave ID (identification) SID einer bestimmten Slaveeinheit als Identifikationspaket, welches als Teilnehmeridentifikation ausgebildet ist, von der Mastereinheit gesendet wird. Danach sendet die Mastereinheit einen Lesebefehl read CMD als Kommandopaket und zwei Adresspakete ADDR#1, ADDR#2. Anschließend antwortet die Slaveeinheit mit den an diesen Adressen abgelegten Daten und sendet diese Daten an die Mastereinheit. Dabei sendet die Mastereinheit Anforderungssignale DSYNC#1 bis DSYNC#8 zur Synchronisation der Datenübertragung der Slaveeinheit, auf welche die Slaveeinheit jeweils mit einem der Datenpakete DATA#1 bis DATA#8 antwortet. Diese Datenübertragung wird mit einem Endungspaket TRAIL abgeschlossen, welches ebenfalls als Antwort auf ein Anforderungspaket der Mastereinheit TSYNC von der Slaveeinheit gesendet wird.

Mastereinheit und Slaveeinheit kommunizieren beispielgemäß ausschließlich über die erste Datenleitung als einzige Datenleitung.

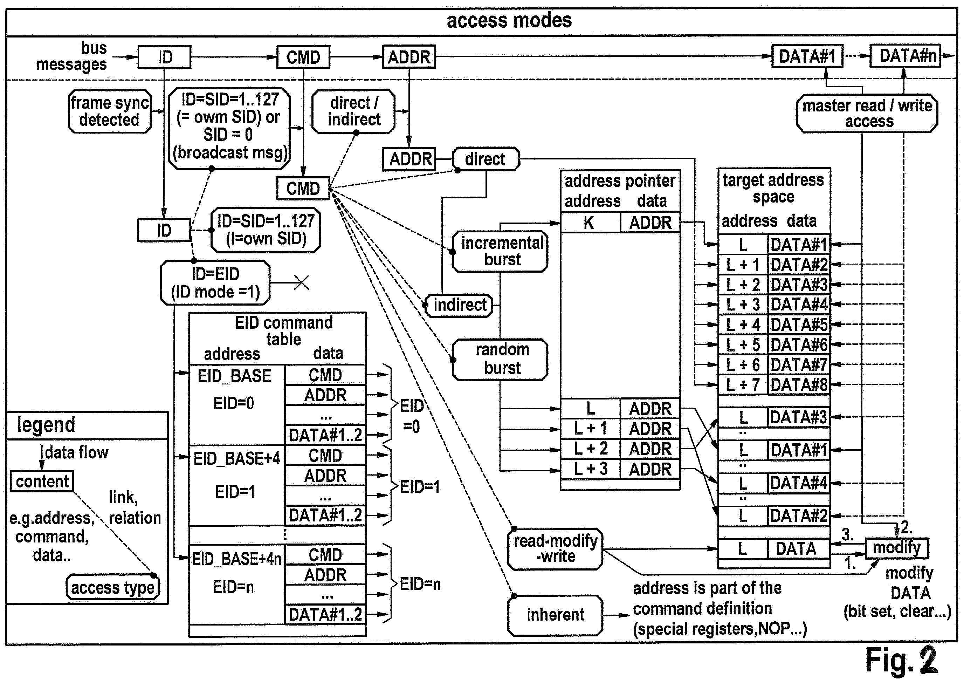

In Fig. 2 ist beispielhaft die Informations- und Signalverarbeitung einer zweiten Kommunikationseinheit bzw. einer Slaveeinheit im Zusammenwirken bzw. als Reaktion auf eine Botschaft der ersten Kommunikationseinheit bzw. der Mastereinheit veranschaulicht. Die Slaveeinheit erfasst dabei zu Beginn des Kommunikationsvorgangs ein nicht dargestelltes Synchronisationspaket bzw. Synchronisationssignal frame sync der Mastereinheit. Anschließend wird ein von der Mastereinheit gesendetes Identifikationspaket ID ausgewertet. Beinhaltet dies eine Anweisungsidentifikation bzw. eine Event ID EID, dann wird dieses Event anhand einer Anweisungsidentifikations-Zuordnungseinheit, beispielgemäß eine als Tabelleneinheit im Slave hinterlegte EID command table, interpretiert und die entsprechende Anweisung bzw. Routine, wird mittels der hinterlegten bzw. mittels der seitens der Anweisungsidentifikations-Zuordnungseinheit referenzierten Kommando- und Adresspakete sowie der gespeicherten Daten ausgeführt. Dabei findet diese Ausführung beispielgemäß innerhalb jeder an denselben Bus angeschlossenen Slaveeinheit statt, wobei die Slaveeinheiten nicht beispielsweise gemäß der definierten, bezüglich der Anweisungsidentifikation hinterlegten, Anweisung antworten, sondern mögliche Ergebnisse lediglich an definierten eigenen Speicheradressen abspeichern.

Beispielgemäß sind auch Anweisungsidentifikationen vorgesehen, welche nur von einer oder einer definierten Anzahl an Slaveeinheiten so interpretiert werden, dass eine definierte Anweisung ausgeführt wird.

Umfasst das Identifikationspaket eine Teilnehmeridentifikation Slave ID SID, welche aus einem oder mehreren Bits besteht, dann interpretiert die Slaveeinheit dies als noch unabgeschlossenen Kommunikationsvorgang mit der Mastereinheit und interpretiert das darauf folgende Kommandopaket CMD, welches die Information umfasst, ob ein Lese- oder Schreibzugriff erfolgen soll und ob dieser bezüglich einer direkten Adresse direct oder mittels eines Zeigers indirect erfolgt und ob dieser Speicherzugriff über den Zeiger "linear" bzw. inkrementell incremental burst oder "wahlfrei" random burst durchgeführt werden soll. Alternativ kann das Kommandopaket CMD einen Lese- oder Schreibezugriff aufweisen, bei welchem die Adresse impliziet enthalten ist "inherent" oder bei welchem ein bit-weiser Zugriff durchgeführt wird "read-modify-write".

Die Slaveeinheit umfasst beispielgemäß eine Speicherverwaltung mit Adresszeigern address pointer sowie einen Speicher, der Register und/oder RAM und/oder EEPROM und/oder eine andere Speicherart umfassen kann. Diese Speicherverwaltung ermöglicht beispielgemäß indirekte Speicherzugriffe.

Am Ende der Botschaft sendet die Mastereinheit oder die Slaveeinheit eine Botschaft bzw. Nutzdaten in Form von Datenpaketen DATA#1 bis DATA#n.

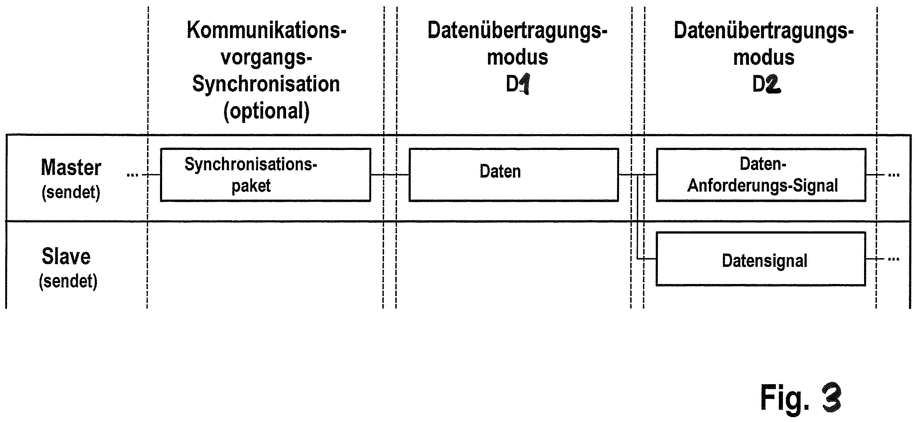

In Fig. 3 sind die Grundzüge des Datenübertragungsprotokolls beispielhaft veranschaulicht. In einem zweiten Datenübertragungsmodus D2 antwortet eine Slaveeinheit mit jeweils einem Datensignal auf ein Datenanforderungssignal der Mastereinheit. In einem ersten Datenübertragungsmodus D1 sendet lediglich die Mastereinheit Daten bzw. Datensignale, in welche jeweils ein Taktsignal eingebettet ist. Die Synchronisation zum Start eines neuen Kommunikationsvorgangs wird mittels der Übertragung eines Synchronisationspakets durch die Mastereinheit durchgeführt.

## Patentansprüche

1. Elektronisches Kommunikationssystem, umfassend wenigstens eine erste und eine zweite Kommunikationseinheit (Master, Slave), die mittels zumindest einer ersten Datenleitung miteinander verbunden sind, wobei das Kommunikationssystem ein Datenübertragungsprotokoll aufweist, welches so ausgebildet ist, dass wenigstens ein definierter Kommunikationsvorgang das Übertragen eines Kommandopakets (CMD) von der ersten Kommunikationseinheit (Master) an zumindest die zweite Kommunikationseinheit (Slave) über wenigstens die erste Datenleitung umfasst, **dadurch gekennzeichnet, dass**
das Datenübertragungsprotokoll so ausgebildet ist, dass die erste Kommunikationseinheit (Master) in einem ersten Datenübertragungsmodus (D1) ein Datensignal und ein Taktsignal im Wesentlichen gleichzeitig und/oder das Taktsignal eingebettet in das Datensignal und/oder ein gemeinsames Daten-Taktsignal über die erste Datenleitung zumindest an die zweite Kommunikationseinheit (Slave) überträgt und dass das Kommunikationssystem als serielles Kommunikationssystem mit genau einer Leitung oder genau zwei Leitungen ausgebildet ist, wobei das Datenübertragungsprotokoll so ausgebildet ist, dass das Kommandopaket (CMD) zumindest eine Information darüber enthält, ob ein Lese- oder Schreibezugriff durchgeführt werden soll und/oder ob ein Einzel- oder Mehrfachzugriff durchgeführt werden soll und/oder ob ein direkter oder indirekter Speicherzugriff durchgeführt werden soll.

2. Kommunikationssystem nach Anspruch 1, **dadurch gekennzeichnet, dass** zumindest die zweite Kommunikationseinheit (Slave) so ausgebildet ist, dass sie das Identifikationspaket (ID) als Teilnehmeridentifikation (SID) oder Anweisungsidentifikation (EID) interpretiert und sich nach dieser Interpretation selbstständig in einen definierten Betriebsmodus versetzt und/oder auf weitere Pakete (CMD, ADDR, DATA) wartet und/oder eine definierte Antwort an die erste Kommunikationseinheit (Master) überträgt und/oder eine interne Aktivität selbsttätig veranlasst und ausführt, wobei diese interne Aktivität insbesondere das Speichern eines definierten Datums oder mehrerer definierter Daten an einer oder mehreren definierten Speicheradressen umfasst.

3. Kommunikationssystem nach Anspruch 1 oder 2, **dadurch gekennzeichnet, dass** zumindest die zweite Kommunikationseinheit (Slave) so ausgebildet ist, dass sie wenigstens eine Anweisungsidentifikations-Zuordnungseinheit (EID command table) aufweist, insbesondere als Tabelleneinheit ausgebildet, welche mindestens einer definierten Anweisungsidentifikation (EID) eines Identifikationspakets (ID) den Inhalt einer oder mehrerer Speicherzellen der zweiten Kommunikationseinheit (Slave) zur Ausführung einer definierten, zumindest teilweise in dieser wenigstens einen Speicherzelle hinterlegten, Anweisung zuordnet.

4. Kommunikationssystem nach Anspruch 2 oder 3, **dadurch gekennzeichnet, dass** das Datenübertragungsprotokoll und zumindest die zweite Kommunikationseinheit (Slave) so ausgelegt sind, dass der Inhalt der einen oder mehreren Speicherzellen der zweiten Kommunikationseinheit (Slave), die mittels der Anweisungsidentifikations-Zuordnungseinheit (EID command table) einer definierten Anweisungsidentifikation (EID) zugeordnet sind, durch Empfang und Interpretation definierter Pakete, insbesondere zumindest eines definierten Kommandopakets (CMD), eines oder mehrerer definierter Adresspakete (ADDR) und eines oder mehrerer definierter Datenpakete (Data), seitens der zweiten Kommunikationseinheit (Slave) zumindest teilweise überschrieben wird.

5. Verfahren zur Datenübertragung zwischen zumindest einer ersten Kommunikationseinheit (Master) und wenigstens einer zweiten Kommunikationseinheit (Slave), insbesondere innerhalb eines Kommunikationssystems gemäß mindestens einem der Ansprüche 1 bis 4, wobei die erste Kommunikationseinheit (Master) und die zweite Kommunikationseinheit (Slave) über mindestens eine erste Datenleitung miteinander verbunden sind, wobei das Kommunikationssystem ein Datenübertragungsprotokoll aufweist und in einem definierten Kommunikationsvorgang ein Kommandopaket (CMD) von der ersten Kommunikationseinheit (Master) an zumindest die zweite Kommunikationseinheit (Slave) über wenigstens die erste Datenleitung übertragen wird, **dadurch gekennzeichnet, dass** die erste Kommunikationseinheit (Master) in einem ersten Datenübertragungsmodus (D1) ein Datensignal und ein Taktsignal im Wesentlichen gleichzeitig und/oder das Taktsignal eingebettet in das Datensignal und/oder ein gemeinsames Daten-Taktsignal über die erste Datenleitung zumindest an die zweite Kommunikationseinheit (Slave) überträgt und dass das Kommunikationssystem als serielles Kommunikationssystem mit genau einer Leitung oder genau zwei Leitungen ausgebildet ist, wobei das Datenübertragungsprotokoll so ausgebildet ist, dass das Kommandopaket (CMD) zumindest eine Information darüber enthält, ob ein Lese- oder Schreibezugriff durchgeführt werden soll und/oder ob ein Einzel- oder Mehrfachzugriff durchgeführt werden soll und/oder ob ein direkter oder indirekter Speicherzugriff durchgeführt werden soll.

6. Verfahren nach Anspruch 5, **dadurch gekennzeichnet, dass** in einem definierten Kommunikationsvorgang zusätzlich, insbesondere anschließend, eine Botschaft (message, DATA) von der ersten Kommunikationseinheit (Master) an die zweite Kommunikationseinheit (Slave) und/oder eine Botschaft (message, DATA) von der zweiten Kommunikationseinheit (Slave) an die erste Kommunikationseinheit (Master) über wenigstens die erste Datenleitung übertragen wird.

7. Verfahren nach Anspruch 5 oder 6, **dadurch gekennzeichnet, dass** das Identifikationspaket (ID) zumindest von der zweiten Kommunikationseinheit (Slave) als Teilnehmeridentifikation (SID) oder Anweisungsidentifikation (EID) interpretiert wird, wonach sich die zweite Kommunikationseinheit (Slave) selbst in einen definierten Betriebsmodus versetzt und/oder auf weitere Pakete (CMD, ADDR, DATA) wartet und/oder wonach die zweite Kommunikationseinheit (Slave) eine definierte Antwort an die erste Kommunikationseinheit (Master) überträgt und/oder eine interne Aktivität selbsttätig veranlasst und ausführt, wobei diese interne Aktivität insbesondere das Speichern eines definierten Datums oder mehrerer definierter Daten an einer oder mehreren definierten Speicheradressen umfasst.

8. Verfahren nach mindestens einem der Ansprüche 5 bis 7, **dadurch gekennzeichnet, dass** wenigstens die zweite Kommunikationseinheit (Slave) zumindest eine definierte Anweisungsidentifikation (EID) eines Identifikationspakets (ID) mittels einer Anweisungsidentifikations-Zuordnungseinheit (EID command table) einer Anweisung zuordnet und diese ausführt, welche als Inhalt einer oder mehrerer Speicherzellen in der zweiten Kommunikationseinheit (Slave) hinterlegt ist, wobei diese Anweisung insbesondere zumindest aus einem Datum entsprechend einem Kommandopaket (CMD), aus zumindest einem Datum entsprechend wenigstens einem Adresspaket (ADDR) und aus einem oder mehreren Daten entsprechend mindestens einem Datenpaket (Data) besteht.

9. Verfahren nach mindestens einem der Ansprüche 5 bis 8, **dadurch gekennzeichnet, dass** nach Empfang eines Kommandopakets (CMD), welches einen indirekten Speicherzugriff anzeigt, die Adressinformation des nachfolgenden Adresspakets (ADDR) auf eine Speicherzelle verweist, in welcher die Adressinformation einer anderen Speicherzelle (K, L) hinterlegt ist, auf welche der Speicherzugriff erfolgt.

10. Verfahren nach mindestens einem der Ansprüche 5 bis 9, **dadurch gekennzeichnet, dass** zur Referenzänderung für einen indirekten Speicherzugriff, die Adressinformation, welche in einer bestimmten Speicherzelle hinterlegt ist, überschrieben wird.

11. Verwendung des Kommunikationssystems nach mindestens einem der Ansprüche 1 bis 4 in Kraftfahrzeugen.

## Claims

1. Electronic communication system, comprising at least one first and a second communication unit (master, slave) which are connected to one another by means of at least one first data line, wherein the communication system has a data transmission protocol which is designed such that at least one defined communication process comprises the transmission of a command packet (CMD) from the first communication unit (master) to at least the second communication unit (slave) via at least the first data line, **characterized in that** the data transmission protocol is designed such that the first communication unit (master) in a first data transmission mode (D1) transmits a data signal and a clock signal essentially simultaneously and/or the clock signal embedded in the data signal and/or a common data clock signal via the first data line at least to the second communication unit (slave) and that the communication system is designed as a serial communication system having precisely one line or precisely two lines, wherein the data transmission protocol is designed such that the command packet (CMD) contains at least one information item regarding whether read or write access is intended to be performed and/or whether single or multiple access is intended to be performed and/or whether direct or indirect memory access is intended to be performed.

2. Communication system according to Claim 1, **characterized in that** at least the second communication unit (slave) is designed such that it interprets the identification packet (ID) as a subscriber identification (SID) or instruction identification (EID) and, on the basis of this interpretation, automatically puts itself into a defined mode of operation and/or awaits further packets (CMD, ADDR, DATA) and/or transmits a defined response to the first communication unit (master) and/or automatically prompts and executes an internal activity, said internal activity comprising particularly the storage of a defined data item or a plurality of defined data items at one or more defined memory addresses.

3. Communication system according to Claim 1 or 2, **characterized in that** at least the second communication unit (slave) is designed such that it has at least one instruction identification association unit (EID command table), particularly in the form of a table unit, which assigns to at least one defined instruction identification (EID) from an identification packet (ID) the content of one or more memory cells in the second communication unit (slave) for the purpose of executing a defined instruction which is at least partially stored in said at least one memory cell.

4. Communication system according to Claim 2 or 3, **characterized in that** the data transmission protocol and at least the second communication unit (slave) are designed such that the content of the one or more memory cells in the second communication unit (slave), which are associated with a defined instruction identification (EID) by means of the instruction identification association unit (EID command table), is at least partially overwritten by the second communication unit (slave) by virtue of the reception and interpretation of defined packets, particularly of at least one defined command packet (CMD), one or more defined addressed packets (ADDR) and one or more defined data packets (data).

5. Method for data transmission between at least one first communication unit (master) and at least one second communication unit (slave), particularly within a communication system according to at least one of Claims 1 to 4, wherein the first communication unit (master) and the second communication unit (slave) are connected to one another by means of at least one first data line, wherein the communication system has a data transmission protocol and a defined communication process involves a command packet (CMD) being transmitted from the first communication unit (master) to at least the second communication unit (slave) via at least the first data line, **characterized in that** the first communication unit (master) in a first data transmission mode (D1) transmits a data signal and a clock signal essentially simultaneously and/or the clock signal embedded in the data signal and/or a common data clock signal via the first data line at least to the second communication unit (slave) and that the communication system is designed as a serial communication system having precisely one line or precisely two lines, wherein the data transmission protocol is designed such that the command packet (CMD) contains at least one information item regarding whether read or write access is intended to be performed and/or whether single or multiple access is intended to be performed and/or whether direct or indirect memory access is intended to be performed.

6. Method according to Claim 5, **characterized in that** a defined communication process additionally, in particular subsequently, involves a message (message, DATA) being transmitted from the first communication unit (master) to the second communication unit (slave) and/or a message (message, DATA) being transmitted from the second communication unit (slave) to the first communication unit (master) via at least the first data line.

7. Method according to Claim 5 or 6, **characterized in that** the identification packet (ID) is interpreted at least by the second communication unit (slave) as a subscriber identification (SID) or instruction identification (EID), on the basis of which the second communication unit (slave) puts itself into a defined mode of operation and/or awaits further packets (CMD, ADDR, DATA) and/or on the basis of which the second communication unit (slave) transmits a defined response to the first communication unit (master) and/or automatically prompts and executes an internal activity, said internal activity particularly comprising the storage of a defined data item or of a plurality of defined data items at one or more defined memory addresses.

8. Method according to at least one of Claims 5 to 7, **characterized in that** at least the second communication unit (slave) associates at least one defined instruction identification (EID) from an identification packet (ID) with an instruction by means of an instruction identification association unit (EID command table) and executes said instruction, which is stored as the content of one or more memory cells in the second communication unit (slave), said instruction particularly comprising at least one data item corresponding to a command packet (CMD), at least one data item corresponding to at least one address packet (ADDR) and one or more data items corresponding to at least one data packet (data).

9. Method according to at least one of Claims 5 to 8, **characterized in that**, following reception of a command packet (CMD) which indicates indirect memory access, the address information item from the subsequent address packet (ADDR) points to a memory cell which stores the address information item from another memory cell (K, L), to which the memory access is effected.

10. Method according to at least one of Claims 5 to 9, **characterized in that** the address information item which is stored in a particular memory cell is overwritten for the change of reference for indirect memory access.

11. Use of the communication system according to at least one of Claims 1 to 4 in motor vehicles.

## Revendications

1. Système de communication électronique comprenant au moins une première et une deuxième unité de communication (Master, Slave) qui sont reliées l'une à l'autre par au moins une première ligne de données, dans lequel le système de communication possède un protocole de transmission de données qui est conçu pour qu'au moins un processus de communication défini comprenne la transmission d'un paquet d'instruction (CMD) de la première unité de communication (Master) à au moins la deuxième unité de communication (Slave) via au moins la première ligne de données,
**caractérisé en ce que** le protocole de transmission de données est conçu pour que la première unité de communication (Master), dans un premier mode de transmission de données (D1), transmette un signal de données et un signal d'horloge sensiblement simultanément et/ou le signal d'horloge intégré au signal de données et/ou un signal de données-d'horloge commun via la première ligne de données à au moins la deuxième unité de communication (Slave) et **en ce que** le système de communication est conçu sous la forme d'un système de communication série comportant exactement une ligne ou exactement deux lignes, dans lequel le protocole de transmission de données est conçu pour que le paquet d'instruction (CMD) contienne au moins une information indiquant si un accès en lecture ou en écriture doit être effectué et/ou si un accès unique ou multiple doit être effectué et/ou si un accès direct ou indirect en mémoire doit être effectué.

2. Système de communication selon la revendication 1, **caractérisé en ce qu'**au moins la deuxième unité de communication (Slave) est conçue pour interpréter le paquet d'identification (ID) en tant qu'identification d'abonné (SID) ou qu'identification d'instruction (EID) et, selon ladite interprétation, se met automatiquement dans un mode de fonctionnement défini et/ou attend d'autres paquets (CMD, ADDR, DATA) et/ou transmet une réponse définie à la première unité de communication (Master) et/ou déclenche et exécute automatiquement une activité interne, dans lequel ladite activité interne comprend notamment le stockage d'une date définie ou de plusieurs données définies à une ou plusieurs adresses mémoire définies.

3. Système de communication selon la revendication 1 ou 2, **caractérisé en ce qu'**au moins la deuxième unité de communication (Slave) est conçue pour comporter au moins une unité d'identification-association d'instruction (EID command table), en particulier conçue sous la forme d'une unité à table qui associe le contenu d'une ou plusieurs cellules mémoire de la deuxième unité de communication (Slave) à au moins une identification d'instruction (EID) définie d'un paquet d'identification (ID) pour l'exécution d'une instruction définie au moins partiellement stockée dans ladite au moins une cellule mémoire.

4. Système de communication selon la revendication 2 ou 3, **caractérisé en ce que** le protocole de transmission de données et au moins la deuxième unité de communication (Slave) sont conçus pour que le contenu d'une ou plusieurs cellules mémoire de la deuxième unité de communication (Slave), qui sont associées à une identification d'instruction (EID) définie au moyen de l'unité d'identification-association d'instruction (EID command table), soit au moins partiellement écrasé, du côté de la deuxième unité de communication (Slave), par la réception et l'interprétation de paquets définis, notamment d'au moins un paquet d'instruction (CMD) défini, d'un ou plusieurs paquets d'adresses (ADDR) définis et d'un ou plusieurs paquets de données (Data) définis.

5. Procédé de transmission de données entre au moins une première unité de communication (Master) et au moins une deuxième unité de communication (Slave), en particulier dans un système de communication selon au moins l'une des revendications 1 à 4, dans lequel la première unité de communication (Master) et la deuxième unité de communication (Slave) sont reliées l'une à l'autre via au moins une première ligne de données, dans lequel le système de communication possède un protocole de transmission de données et, lors d'un processus de communication défini, un paquet d'instruction (CMD) est transmis de la première unité de communication (Master) à au moins la deuxième unité de communication (Slave) via au moins la première ligne de données,
**caractérisé en ce que** la première unité de communication (Master), dans un premier mode de transmission de données (D1), transmet un signal de données et un signal d'horloge sensiblement simultanément et/ou le signal d'horloge incorporé au signal de données et/ou un signal de données-d'horloge commun via la première ligne de données au moins à la deuxième unité de communication (Slave) et **en ce que** le système de communication est conçu sous la forme d'un système de communication série comportant exactement une ligne ou exactement deux lignes, dans lequel le protocole de transmission de données est conçu pour que le paquet d'instruction (CMD) contienne au moins une information indiquant si un accès en lecture ou en écriture doit être effectué et/ou si un accès unique ou multiple doit être effectué et/ou si un accès direct ou indirect en mémoire doit être effectué.

6. Procédé selon la revendication 5, **caractérisé en ce que**, lors d'un processus de communication défini, un message (message, DATA) est transmis de manière supplémentaire, en particulier ultérieurement, de la première unité de communication (Master) à la deuxième unité de communication (Slave) et/ou un message (message, DATA) est transmis de la deuxième unité de communication (Slave) à la première unité de communication (Master) via au moins la première ligne de données.

7. Procédé selon la revendication 5 ou 6, **caractérisé en ce que** le paquet d'identification (ID) est interprété au moins par la deuxième unité de communication (Slave) en tant qu'identification d'abonné (SID) ou qu'identification d'instruction (EID), puis **en ce que** la deuxième unité de communication (Slave) se met dans un mode de fonctionnement défini et/ou attend d'autres paquets (CMD, ADDR, DATA) et/ou **en ce qu'**ensuite, la deuxième unité de communication (Slave) transmet une réponse définie à la première unité de communication (Master) et/ou déclenche et exécute automatiquement une activité interne, dans lequel ladite activité interne comprend notamment le stockage d'une date définie ou de plusieurs données définies à une ou plusieurs adresses mémoire définies.

8. Procédé selon au moins l'une des revendications 5 à 7, **caractérisé en ce qu'**au moins la deuxième unité de communication (Slave) associe au moins une identification d'instruction (EID) définie d'un paquet d'identification (ID) à une instruction au moyen d'une unité d'identification-association d'instruction (EID command table) et l'exécute, laquelle instruction est stockée en tant que contenu d'une ou plusieurs cellules mémoire dans la deuxième unité de communication (Slave), dans lequel ladite instruction est notamment constituée d'au moins une date correspondant à un paquet d'instruction (CMD), d'au moins une date correspondant à au moins un paquet d'adresse (ADDR) et d'une ou plusieurs données correspondant à au moins un paquet de données (Data).

9. Procédé selon au moins l'une des revendications 5 à 8, **caractérisé en ce qu'**après la réception d'un paquet d'instruction (CMD) qui indique un accès indirect en mémoire, l'information d'adresse du paquet d'adresse (ADDR) suivant se réfère à une cellule mémoire dans laquelle est stockée l'information d'adresse d'une autre cellule mémoire (K, L) à laquelle est effectué l'accès en mémoire.

10. Procédé selon au moins l'une des revendications 5 à 9, **caractérisé en ce que** l'information d'adresse stockée dans une cellule mémoire spécifique est écrasée à des fins de modification de référence pour un accès indirect en mémoire.

11. Utilisation du système de communication selon au moins l'une des revendications 1 à 4 dans des véhicules automobiles.
